# NEW EUROPEAN PATENT SPECIFICATION

(11) **EP 1 741 594 B2**
(45) Date of publication and mention of the opposition decision: **26.11.2014**
(45) Mention of the grant of the patent: 23.02.2011
(21) Application number: 06116588.2
(22) Date of filing: 04.07.2006
(51) Int. Cl.: B60P 1/02, B60P 1/52

(54) **Apparatus and method for moving pallets**
Vorrichtung und Verfahren zur Förderung von Paletten
Dispositif et méthode pour le mouvement de palettes

(30) Priority: 07.07.2005 EP 05014763
(43) Date of publication of application: 10.01.2007
(73) Proprietor: OMAR-S.R.L., 61032 Fano (PU) (IT)
(72) Inventor: Negro, Daniele, 20063 Cernusco sul Naviglio (MI) (IT)
(74) Representative: Crugnola, Pietro

(56) References cited:
- EP-A1- 0 219 151
- EP-A1- 0 282 122
- WO-A-88/00538
- WO-A1-88/00538
- DE-U1- 20 320 539
- GB-A- 1 251 065
- 'Auto en Transportwereld' no. 42, 09 June 1990, page 19
- 'Eerste oplegger van Deckers voor vervoer van luchtvrachtpallets' ONDERNEMEND NEDERLAND no. 89, 13 July 1990,

## Description

The invention relates to apparatuses for moving pallets, in particular for moving pallets for transport by air according to the preamble of claim 1. The document WO 88/00538 A discloses an apparatus of this type.

The pallets used in the transport by air industry comprise an aluminium rectangular base on which a load is placed that it is desired to transport.

The load is subsequently covered and retained by an appropriate retaining net that is secured to the base by means of a plurality of hooks with which the latter is provided.

The appropriately prepared pallets are then positioned on the trailer trucks that transfer them to an airport, where they are subsequently loaded on appropriate aircraft or cargo planes.

Apparatuses are known for moving pallets for transport by air comprising trailer trucks provided with a trailer provided with a loading space delimited below by a planar loading platform and above and laterally by a stiff or flexible cover.

The trailer is furthermore equipped with two or more parallel rows of conveying rollers extending along the longitudinal extent of the loading platform.

The conveying rollers are each provided with a respective seat obtained in the loading platform.

Each conveying roller is furthermore drivable vertically upwards and/or downwards and is rotatable by respective motor devices.

When the conveying rollers are driven upwards, each projects from the respective seat and emerges from the loading platform in such a way as to move the pallets along the latter, whilst when the conveying rollers are driven downwards they reposition themselves in the respective seats, enabling the respective pallets to be fixed on the loading platform.

The operation of the known apparatuses is as follows: when it is desired to load pallets for transport by air into the loading space of a trailer truck, the conveying rollers that emerge from the respective seats are driven upwards and a first pallet is deposited on the rollers.

At this point, the conveying rollers are rotated so that the first pallet resting thereupon is transferred to a front end of the loading space where it is placed in a first loading station.

It is now possible to load into the loading space a second pallet that is conveyed onto the loading platform by the conveying rollers until it is positioned in a second loading station adjacent to the first loading station, and so on also for the subsequent pallets until the loading stations obtained in the aforementioned loading space are full.

Once all the pallets have been loaded that are stowable in the loading space, rotation is interrupted and the conveying rollers are driven downwards to enable the pallets to be anchored stably on the loading platform.

On the other hand, when it is desired to unload the pallets, the operations that are necessary for loading the pallets are simply conducted in reverse order.

A drawback of the known vehicles used for air-truck transport is the limited number of pallets that are transportable by each trailer truck, as they cannot be superimposed without exceeding the overall dimension limits set by the European and Swiss highway codes.

In fact, known apparatuses enable only four pallets at a time to be transported.

In this way, numerous journeys and/or several trailer trucks are required for transporting a sufficient number of pallets to fill a hold of a cargo plane, which entails significant transport costs to be borne by airlines.

A further drawback of the known vehicles used for air-truck transport is the inability to exploit the loading space adequately.

In fact, in the known apparatuses a considerable upper portion of the loading space remains unoccupied, a portion that is not occupied by the pallets of standard dimensions.

This drawback is further accentuated if pallets are loaded having a vertical extent that is less than that of pallets of standard dimensions.

WO 88/00538A discloses a handling system comprising a plurality of support surfaces which are superposed vertically and means for adjusting the spacing of the surfaces between a closely spaced superposed condition, in which a load can only be supported on the uppermost support surface of the plurality of support surfaces, and a widely spaced condition, in which load can be supported by the uppermost surface and by the surface below it.

GB 1251065A describes a load carrying vehicle body having a floor comprising roller conveyers on each side of which conveyers there are provided pressure fluid cams which are actuable to raise a load or cargo against a rubber ceiling to prevent unwanted movement of the load in the vehicle body.

DE 20320539U teaches a load construction for a motor vehicle comprising a load under base and a height-adjustable lifting floor inside the construction. An object of the invention is to improve the apparatuses for transport by air inside trailer trucks or articulated trucks or the like used for air-truck transport. A further object is to increase the number of pallets that are transportable by a single trailer truck, to reach a maximum of 7 ULDs that are 160 cm high.

A still further object is to optimise the space available in the loading space.

Still another object is to limit the transport costs of the pallets by reducing the number of motor vehicles in circulation.

According to the invention, an apparatus is provided as defined in claim 1.

Owing to the invention, it is possible to obtain apparatuses for moving pallets for transport by air that enable the number of pallets to be increased that are stowable in a loading space of a land vehicle.

In fact, the pallets, once they are positioned inside the loading space, are located on the elevating means that lift them up to a certain height, moving them away from the loading platform.

This enables further pallets to be positioned below each of the elevating means until the loading platform is completely filled.

In this way, it is possible to increase the number of loadable pallets, inasmuch as the latter can be positioned both on the loading platform and on an additional loading plane made by the elevating means.

Furthermore, as the elevating means can lift up from the loading platform to any height, it is possible to locate in the loading space pallets having various vertical dimensions, exploiting the loading space in a more efficient manner.

Moreover, said platform, which is included in said elevating means, enables said pallets to be moved between a lower portion of said loading platform and an upper portion thereof, the lower portion and the upper portion being at different heights, and then enables said pallets to be moved horizontally by means of said further roller means.

This enables to increase the number of said pallets stowable in said land vehicle, inasmuch as said pallets can be positioned also in portions of said loading platform which are at different heights.

In particular, this enables a number of seven 160 cm high ULD to be stowed in a single trailer truck.

The invention can be better understood and implemented with reference to the attached drawings that illustrate an embodiment thereof by way of non-limitative example, in which:
Figure 1 is a perspective view of an apparatus for moving pallets by transport by air;
Figure 2 is a fragmentary frontal perspective view of the apparatus in Figure 1;
Figure 3 is a fragmentary perspective view of a platform of the apparatus in Figure 1;
Figure 4 is a fragmentary perspective view of the movable gates of the apparatus in Figure 1;
Figure 5 is a lateral view of an elevating unit of the apparatus in Figure 1;
Figure 6 is a frontal view of the elevating unit in Figure 5;
Figure 7 is a view from above of the elevating unit in Figure 5;
Figure 8 is a perspective view of the elevating unit in Figure 5;
Figure 9 is a perspective view of a detail of the elevating unit in Figure 5;
Figure 10 is an enlarged detail of Figure 9;
Figure 11 is a fragmentary frontal view of an enlarged detail of the elevating unit in Figure 5;
Figure 12 is a frontal view of a pallet for transport by air;
Figure 13 is a lateral view of the pallet in Figure 12;
Figure 14 is a perspective view of the apparatus in Figure 1 in a first operative configuration;
Figure 15 is a perspective view of the apparatus in Figure 1 in a second operative configuration;
Figure 16 is a perspective view of the apparatus in Figure 1 in a third operative configuration;
Figure 17 is a perspective view of the apparatus in Figure 1 in a fourth operative configuration;
Figure 18 is a perspective view of the apparatus in Figure 1 in a fifth operative configuration;
Figure 19 is a perspective view of the apparatus in Figure 1 in a sixth operative configuration;
Figure 20 is a perspective view of the apparatus in Figure 1 in a seventh operative configuration;
Figure 21 is a perspective view of the apparatus in Figure 1 in an eighth operative configuration;
Figure 22 is a perspective view of the apparatus in Figure 1 in a ninth operative configuration;
Figure 23 is a perspective view of the apparatus in Figure 1 in a tenth operative configuration;
Figure 24 is a perspective view of the apparatus in Figure 1 in an eleventh operative configuration;
Figure 25 is a perspective view of the apparatus in Figure 1 in a twelfth operative configuration.
Figure 26 is a perspective view of the apparatus in Figure 1 in a thirteenth operative configuration;
Figure 27 is a perspective view of the apparatus in Figure 1 in a fourteenth operative configuration.

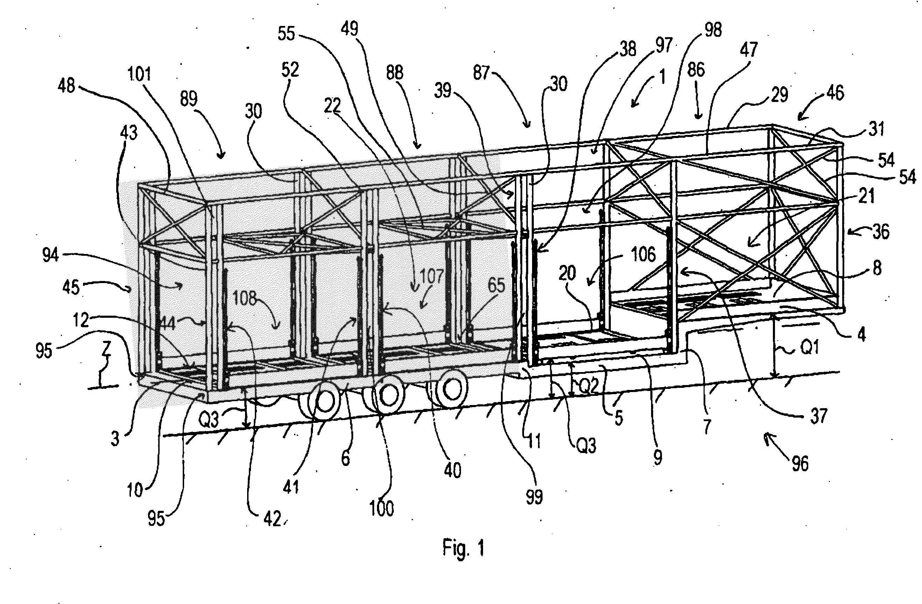

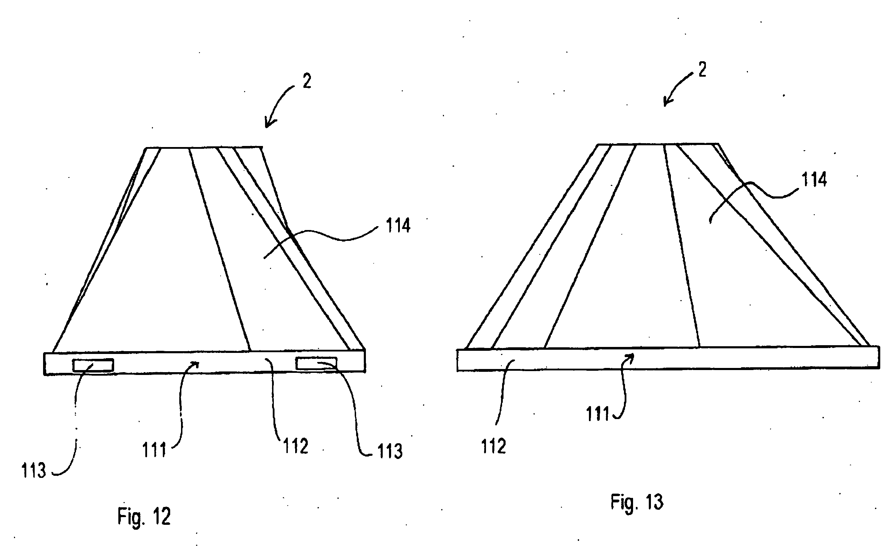

With reference to Figure 1, there is shown an apparatus 1 for storing air pallets 2 (Figures 12 and 13) mounted on a trailer 96 of a land vehicle that is not shown, for example a trailer truck extending for about four thousand and forty millimetres in height.

The apparatus 1 is provided with a loading platform 3 extending along a substantially longitudinal axis Z.

In a preferred embodiment, the loading platform 3 extends in width for about two thousand five hundred and fifty millimetres.

The loading platform 3 comprises a first portion 4, a second portion 5 and a third portion 6, the second portion 5 being interposed between the first portion 4 and the third portion 6.

The first portion 4 and the second portion 5 are connected together by means of a step 7 whereas the second portion 5 and the third portion 6 are connected together by a further step 11.

In this way, the first portion 4, the second portion 5 and the third portion 6 are reciprocally positioned on different planes.

In other words, the first portion 4, the second portion 5 and the third portion 6 are located respectively at a first height Q1, at a second height Q2 and at a third height Q3.

In particular, the first height Q1 is greater than the third height Q3, which in turn is greater than the second height Q2.

Furthermore, the first portion 4, the second portion 5 and the third portion 6 respectively comprise a first surface 8, a second surface 9 and a third surface 10 that are substantially planar.

The first surface 8 and the third surface 10, are each provided with a plurality of conveying rollers 12 having horizontal axes that are substantially perpendicular to the axis Z.

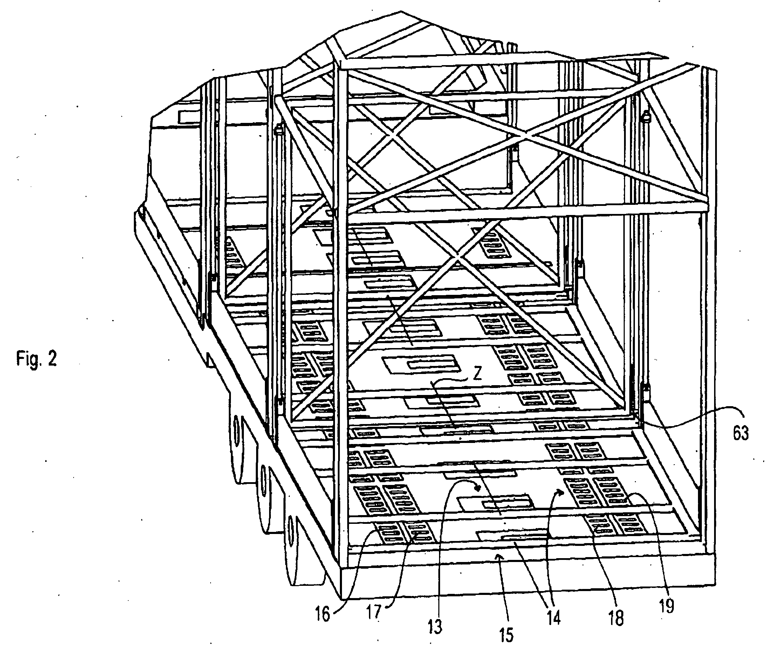

The conveying rollers 12 comprise motor rollers 13 and free to rotate rollers 14 (Figure 2), each roller being housed in a respective seat that is not shown.

The motor rollers 13 are arranged along a first row 15 extending along the axis Z, whilst the free to rotate rollers 14 are arranged along a second row 16, a third row 17, a fourth row 18 and a fifth row 19.

Furthermore, the second row 16 and the third row 17 are close to one another and extend along an axis that is substantially parallel to the axis Z, just as the fourth row 18 and the fifth row 19 are close to one another and develop along a further axis that is substantially parallel to the axis Z.

In other words, the second row 16 with the third row 17 and the fourth row 18 with the fifth row 19 are positioned on opposite parts with respect to the first row 15.

The motor rollers 13 and the free to rotate rollers 14 are movable vertically between a rest position, in which they are located in the respective seats, and an operating position in which they emerge from the respective seats and consequently from the loading platform 3.

In particular, the motor rollers 13 and the free to rotate rollers 14 are driven by driving devices that are not shown, for example driving devices that use pneumatic means to move the motor rollers 13 and the free to rotate rollers 14 from the rest position to the operating position, and which use the force of gravity to take the motor rollers 13 and the free to rotate rollers 14 from the operating position to the rest position.

Furthermore, the motor rollers 13 are rotated by means of further driving devices, that are not shown, for example of electric type, whilst the free to rotate rollers 14 rotate freely around a rotation axis thereof.

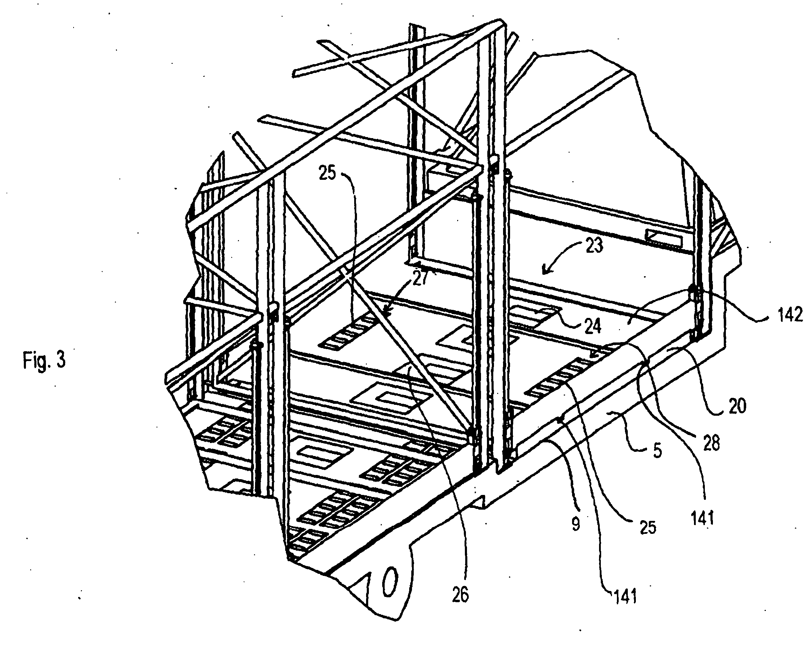

On the second surface 9 there is provided a platform 20 (Figure 3), with a substantially rectangular shape, that is vertically movable between a first operating position in which it is fixed by means of first fixing means, which is not shown, to the second surface 9, and a second operating position in which it is lifted with respect to the aforementioned second surface 9, as will be disclosed better below.

When the platform 20 is positioned in the first operating position it is at a height that is substantially the same as the third height Q3 of the third surface 10.

In this way, the first surface 8 defines a first loading platform 21, whilst the platform 20 and the third surface 10 define a second substantially planar loading platform 22 shown in Figure 1.

The platform 20 is furthermore provided with further conveying rollers 23 comprising further motor rollers 24 and further free to rotate rollers 25 positioned in corresponding seats that are not shown.

In particular, the further motor rollers 24 are arranged according to a further first row 26 that is merely the continuation along the axis Z of the first row 15.

On the other side, the further free to rotate rollers 25 are arranged in two rows, respectively along a sixth row 27 and a seventh row 28 extending substantially parallel to and on opposite sides to the further first row 26.

In particular, the sixth row 27 and the seventh row 28 are the continuation respectively of the second row 16 and of the fifth row 19.

The further motor rollers 24 are drivable vertically between a further rest position and a further operating position and are rotated in a similar manner to the motor rollers 13, just as the further free to rotate rollers 25 are drivable between a further rest position and a further operating position in a similar manner to the free to rotate rollers 14.

The apparatus 1, as shown in Figure 1, further comprises a frame 29 arranged on the one hand for adequately containing the pallets 2 during movement and on the other hand for adequately stiffening the trailer 96.

The frame 29 projects above the loading platform 3, and defines with the latter a loading space 94 in which it is possible to stow the pallets 2.

In a preferred embodiment, the loading space 94 extends in height for approximately three thousand two hundred millimetres.

The frame 29 comprises a plurality of upright elements 30, extending substantially vertically and positioned along longitudinal edges 95 of the loading platform 3 in directions substantially parallel to the axis Z.

In this way, the upright elements 30 are aligned on a first line 44 and on a second line 45.

The upright elements 30 belonging to the first line 44 facing respective upright elements 30 of the second line 45, define transverse pairs of upright elements 30.

In particular, from a front portion 46 of the loading platform 3, a first pair 36, a second pair 37, a third pair 38, a fourth pair 39, a fifth pair 40, a sixth pair 41, a seventh pair 42 and an eighth pair 43 of upright elements 30 are defined.

In particular, the aforementioned pairs are arranged in such a way that between the first pair 36 and the second pair 37 a single loading station 86 is defined, between the second pair 37 and the third pair 38 a first double loading station 87 is defined, between the third pair 38 and the fourth pair 39 a first gap 99 is defined, between the fourth pair 39 and the fifth pair 40 there is defined a second double loading station 88, between the fifth pair 40 and the sixth pair 41 there is defined a second gap 100, between the sixth pair 41 and the seventh pair 42 a third double loading station 89 is defined and in that between the seventh pair 42 and the eighth pair 43 a third gap 101 is defined.

The frame 29 is furthermore provided with a plurality of crosspiece elements 31 extending substantially horizontally, and comprising a plurality of longitudinal elongated elements 47 extending in directions substantially parallel to the axis Z and a plurality of transverse elongated elements 48 extending transversely with respect to the aforesaid axis Z.

The longitudinal elongated elements 47 and the transverse elongated elements 48 are arranged in such a way as to define a first plane 97 substantially parallel to the loading platform 3 and located substantially at an end region 52 of the upright elements 30 and a second plane 98, parallel to the first plane 97, interposed between the first plane 97 and the loading platform 3.

In particular, the longitudinal elongated elements 47 are arranged for longitudinally connecting the distinct pairs of upright elements 30, whilst the transverse elongated elements 48 transversely join the upright elements 30 of the first pair 36 and of the eighth pair 43.

The frame 29 further comprises, in order to further increase the stiffness of the trailer 96 and to suitably contain the pallet 2, (as will be better disclosed below) a plurality of fixed reinforcing means 49, each comprising a pair of tubular elements 54 welded together so as to make an X-shaped structure.

The reinforcing means 49 is positioned between the first plane 97 and the second plane 98 and extends substantially transversely with respect to the axis Z.

In particular, the reinforcing means 49 is positioned between the upright elements 30 of the first pair 36, of the second pair 37 and of the eighth pair 43 and also substantially at the first gap 99, at the second gap 100 and at the third gap 101.

The frame 29 further comprises further reinforcing means, for example movable gates 55 which also have the function of increasing the stiffness of the frame 29 and of acting as separating means between the pallets 2 positioned in the loading space 94.

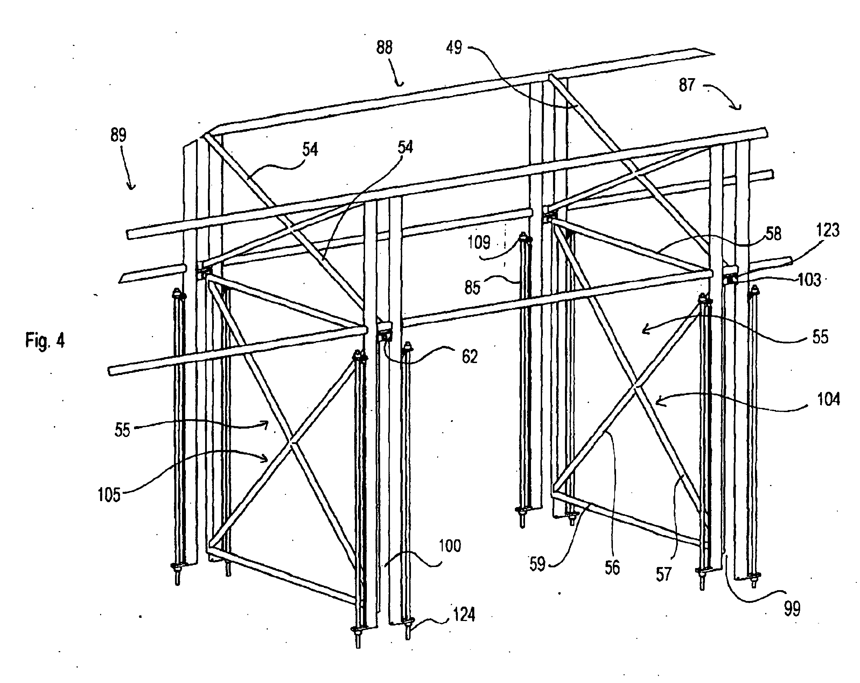

The movable gates 55, shown in detail in Figure 4, are positioned in use between the second plane 98 and the loading platform 3, and extend substantially transversely with respect to the axis Z.

The movable gates 55 comprise a first movable gate 104 and a second movable gate 105, positioned respectively substantially at the first gap 99 and at the second gap 100. In particular, the first movable gate 104 separates the first double loading station 87 from the second double loading station 88, whilst the second movable gate 105 separates the second double loading station 88 from the third double loading station 89.

The movable gates 55 each comprise a tubular structure 56 having a substantially square shape.

The tubular structure 56 is provided with bars 57 positioned at the diagonals of the square defined by the tubular structure 56 that act as stiffening elements.

The tubular structure 56 is furthermore provided with a first side 58 and with a second side 59, the first side 58 being positioned in use above the second side 59.

The first side 58 is provided at the ends thereof with hinges 103 that are fixed to plates 123 that are removably fixed in shaped passages 62 obtained on surfaces facing the pairs of upright elements 30 between which the movable gates 55 are positioned.

In this way, the movable gates 55 can be rotated, describing an angle of substantially 90°, between a first operating position in which they are arranged substantially horizontally and a second operating position in which they are arranged substantially vertically.

In particular, when the movable gates 55 are in the first operating position they enable the passage of the pallets 2 along the loading platform 3, whereas when the movable gates 55 are in the second operating position, they act as separating elements of the loading stations and as stiffening elements of the loading space 94.

In particular, the movable gates 55 rotate around an axis passing through the first horizontal side 58, in such a way that during the movement from the second operating position to the first operating position, the second horizontal side 59 approaches a rear portion 64 of the loading platform 3.

The movable gates 55 are rotated by moving means that is not shown, for example gas springs or electric or pneumatic or hydraulic actuators.

Lastly, when the movable gates 55 are in the second position, they are fixed between the respective gaps through anchoring means 63 (Figure 2).

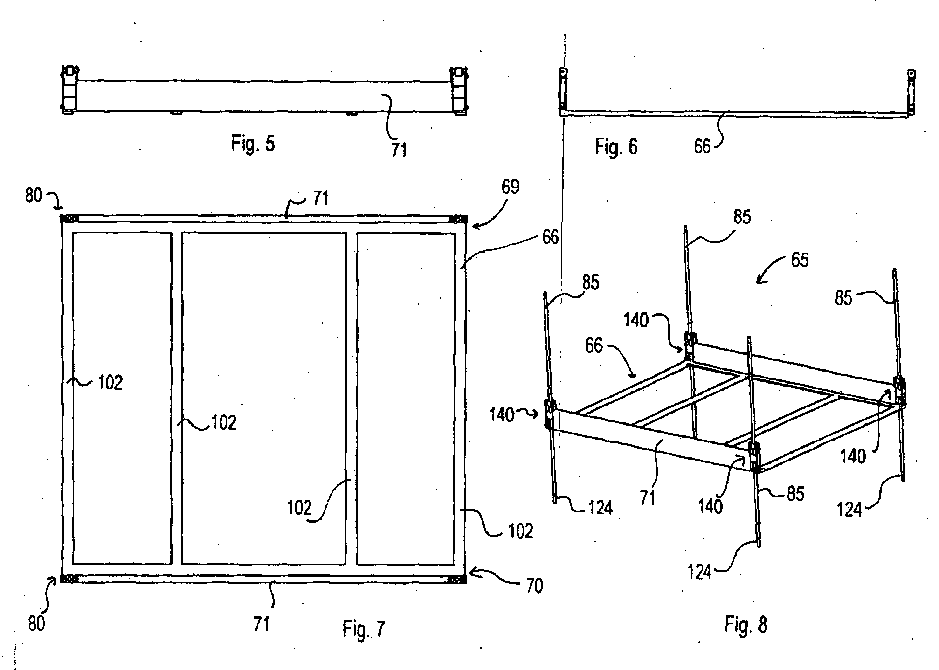

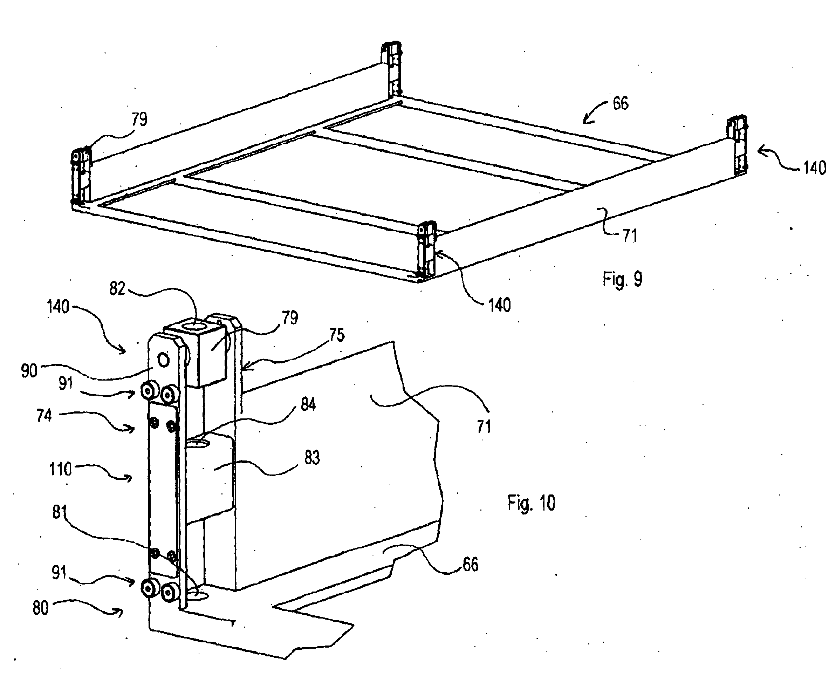

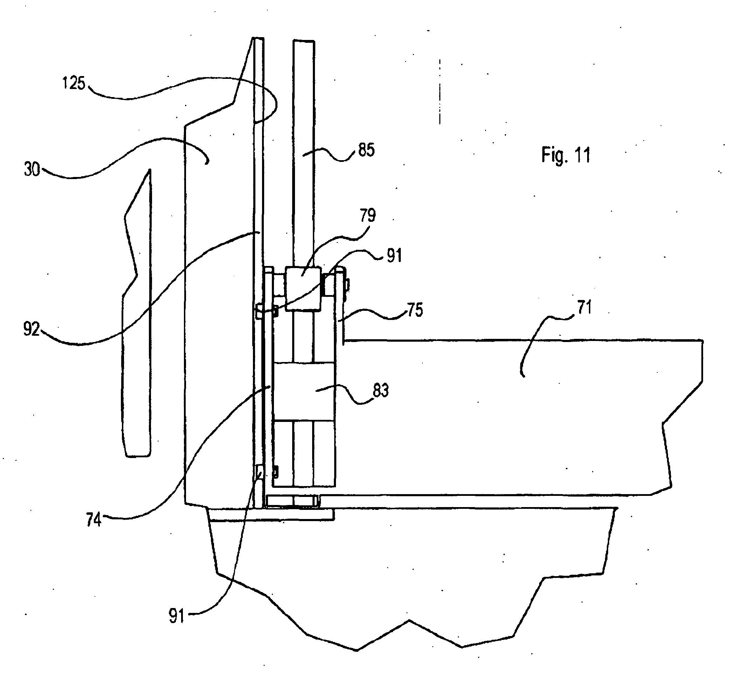

The apparatus 1 further comprises elevating means 65 arranged for lifting a pallet 2, shown in detail in Figures 5 to 11.

The elevating means 65 comprise first elevating means 106, second elevating means 107 and third elevating means 108, positioned, in use, respectively in the first double loading station 87, in the second double loading station 88 and in the third double loading station 89.

The elevating means 65 each comprise a frame 66 provided with a plurality of crosspieces 102, for example reciprocally welded rectangular section bars arranged transversely with respect to the longitudinal extent of the frame 66.

The crosspieces 102 are shaped in such a way as to be able to be received, when the elevating means 65 rests on the loading platform 3, in housing means and in further housing means 141; in this way, when the pallets 2 are moved, and the elevating means 65 are placed on the loading platform 3, the crosspieces 102 are substantially at the same height as the loading platform 3 and do not hamper the transfer of the aforesaid pallets 2.

The housing means, which is not shown, is obtained in the third surface 10 and extends transversely substantially for the entire width of the loading platform 3. In this way, the housing means interrupts transversely the first row 15, the second row 16, the third row 17, the fourth row 18 and the fifth row 19 of the conveying rollers 12.

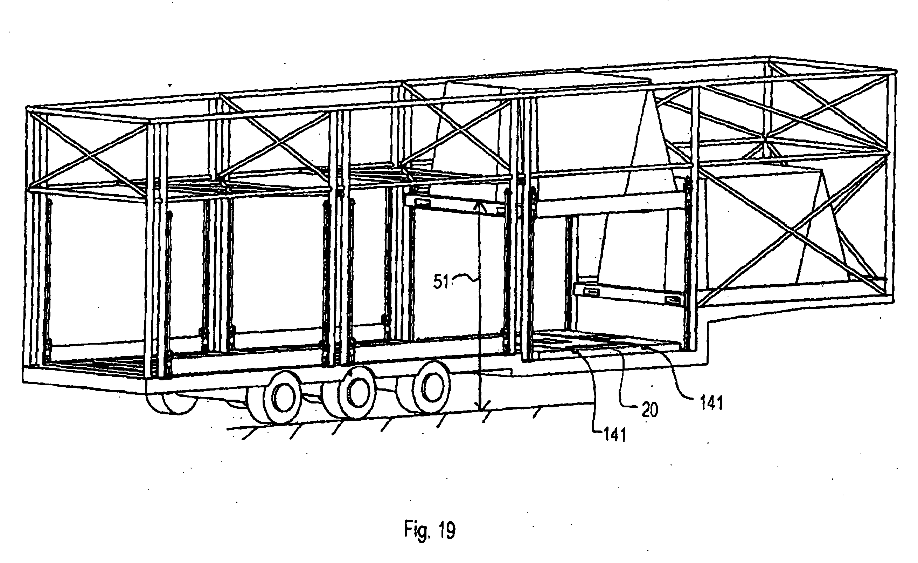

The further housing means 141 (Figure 3 and Figure 19) is obtained on an upper surface 142 of the platform 20 and extends substantially transversely for the entire width of the latter. In this way, the further housing means 141 interrupts transversely the further first row 26, the sixth row 27 and the seventh row 28 of further conveying rollers 23.

The frame 66 is furthermore provided with a first longitudinal edge 69 and with a second longitudinal edge 70, from each of which a side panel 71 projects substantially vertically, extending in use substantially parallel to the axis Z.

The side panels 71 have the function of retaining the load positioned on the pallet 2 laterally during movement.

The frame 66 has a substantially rectangular shape, having an extent substantially equal to that of the pallet 2, and is provided with vertices 80, each of which is provided with a through hole 81 having a substantially vertical axis.

The elevating means 65 furthermore comprises driving means 140 positioned near the vertices 80, arranged for moving substantially vertically the frame 66, moving it away from or towards the loading platform 3.

Each of the driving means 140 comprises screw means, for example a trapezoidal thread worm screw 85, extending substantially vertically.

Each trapezoidal thread worm screw 85 is fixed above to drilled flaps 109 (Figure 4) projecting substantially horizontally in a direction substantially parallel to the axis Z, from the upright elements 30.

Each trapezoidal thread worm screw 85 is arranged for engaging with a corresponding nut screw 79 substantially having the shape of a rectangular parallelpipedon.

Each nut screw 79 is provided with a threaded hole 82, having an axis substantially coinciding with the axis of the through hole 81.

Each nut screw 79 is supported by first supporting means 74 projecting vertically from the frame 66 and by second supporting means 75, opposite the first supporting means 74 projecting from an upper surface of the side panel 71.

With the first supporting means 74 and with the second supporting means 75 in an intermediate region 110 there is furthermore associated a shaped element 83 provided with a circular opening 84, having the function of stiffening the driving means 140.

In use, each trapezoidal thread worm screw 85 is positioned in such a way as to engage with the threaded hole 82, with the circular opening 84 and with the through hole 81.

Furthermore, in use, a lower portion 124 of each trapezoidal thread worm screw 85 projects from below the loading platform 3.

The lower portions 124 of each trapezoidal thread worm screw 85 are connected together through flexible movement transmission means such as, for example, belts or chains that are not shown that rotate them substantially simultaneously.

The flexible movement transmission means is driven by motor means that is not shown, for example of electric, pneumatic or hydraulic type.

In this way, after a rotation of each trapezoidal thread worm screw, the corresponding nut screw is forced to move upwards or downwards, dragging with it the frame 66.

In an embodiment that is not shown, the trapezoidal thread worm screws are connected two by two, for example pairs of trapezoidal thread worm screws are connected together that are positioned longitudinally along the loading platform 3, and the motor means is provided with a control device, electronic or of another type, to ensure the simultaneity of the rotation.

In a further alternative embodiment that is not shown, each screw is provided with a motor means, controlled for example electronically to ensure the simultaneity of the rotation.

Lastly, the first supporting element 74 comprises an external surface 90 on which are positioned two pairs of wheels 91 arranged for engaging with a vertical guide 92, for example in the shape of a bar with a square section with which the upright elements 30 are provided on a side surface 125, in particular the upright elements forming part of the first double loading station 87, of the second double loading station 88 and of the third double loading station 89.

In this way, during driving, the elevating means 65 are each forced to move along the respective guide, thus avoiding undesired twisting.

With reference to Figure 12 and to Figure 13, there is shown a pallet 2 used for transport by air.

The pallet 2 measures typically approximately two thousand four hundred and forty millimetres in width, about three thousand two hundred millimetres in length and about one thousand six hundred millimetres in width.

The pallet 2 is provided with a base 111, for example made of aluminium, comprising folded edges 112 in which there are obtained openings 113, for example rectangular openings, in which forks of a fork lifting device that is not shown can be inserted.

Once a load has been deposited on the base 111, the latter is covered and retained by a suitable containing net 114 secured to the base 111 through a plurality of hooks that are not shown projecting from the folded edges 112.

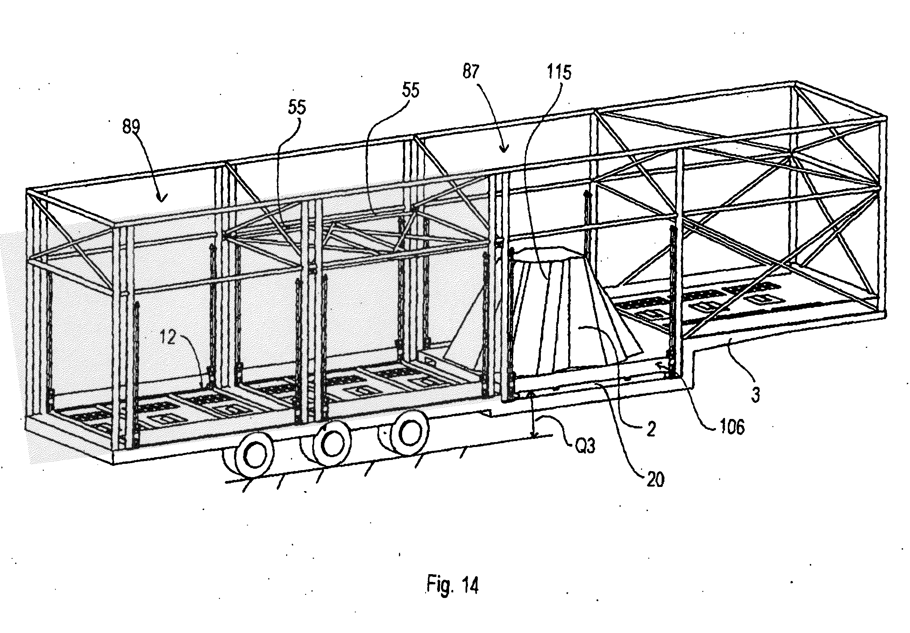

The operation of the apparatus 1, shown in Figures 14 to 27, when it is desired to load loading space 94, is as follows: initially the conveying rollers 12 and the further conveying rollers 23 are in the rest position, the movable gates 55 are in the first operating position, i.e. they are lifted, and the platform 20 is in the first operating position at the third height Q3.

When a first pallet 115 is positioned on the loading platform 3, the motor rollers 13 and the free to rotate rollers 14 of the third double loading station 89 and of the second double loading station 88 and the further motor rollers 24 and the further free to rotate rollers 25 of the first double loading station 87 are commanded that are taken to the operating position and the motor rollers 13 and the further rollers 24 are rotated.

The first pallet 115 is then dragged by the motor rollers 13 from the third double loading station 89 to the first double loading station 87 and is more precisely located on the first elevating means 106, resting on the platform 20.

At this point, the first fixing means is released that retains the platform 20 anchored to the second surface 9 and the platform 20 is fixed to the first elevating means 106 through second fixing means that is not shown with which it is provided.

The first elevating means 106 is then driven that moves upwards the first pallet 115 and the platform 20.

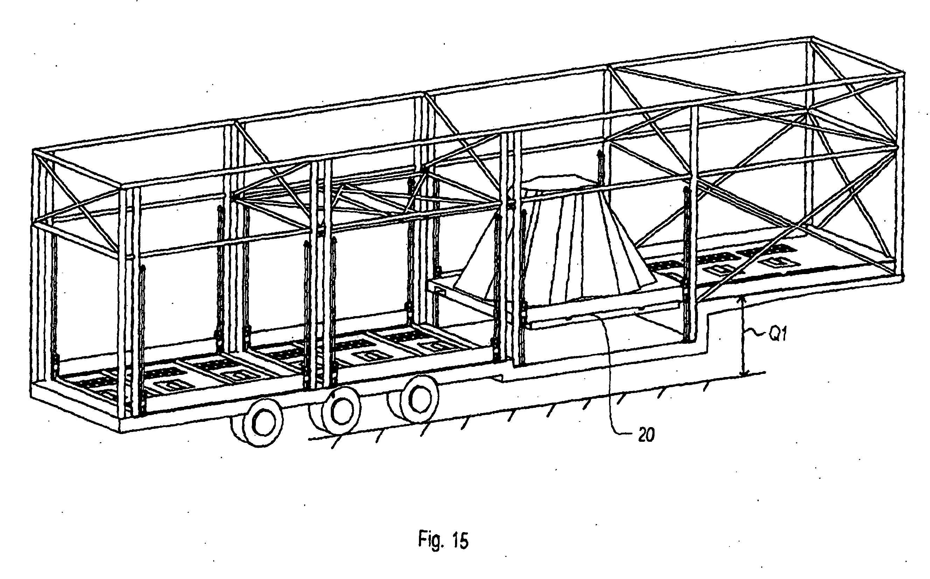

In particular, the first elevating means 106 lifts the platform 20 to the second operating position, i.e. to the first height Q1 (Figure 15).

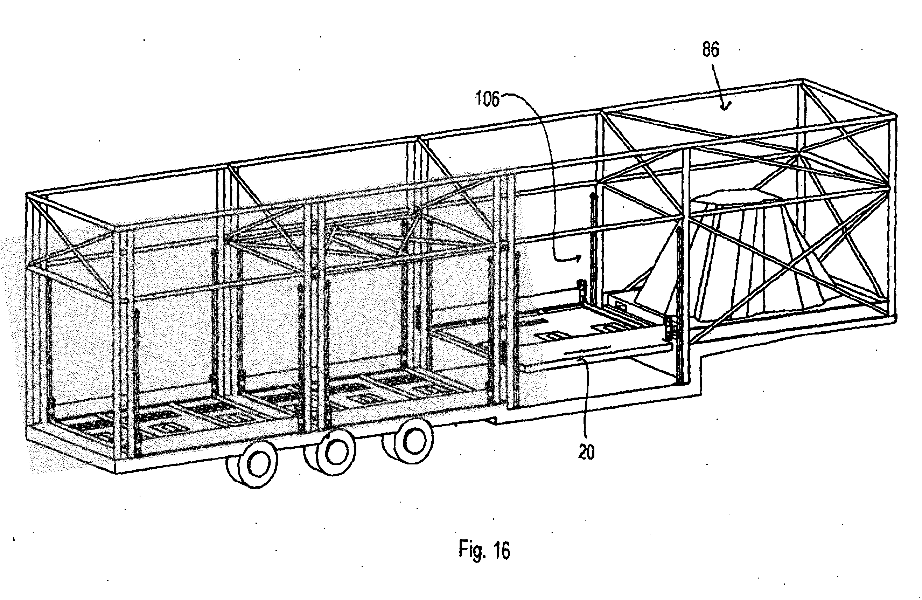

The further motor rollers 24, by rotating, drag the first pallet 115, positioning it in the single loading station 86 (Figure 16).

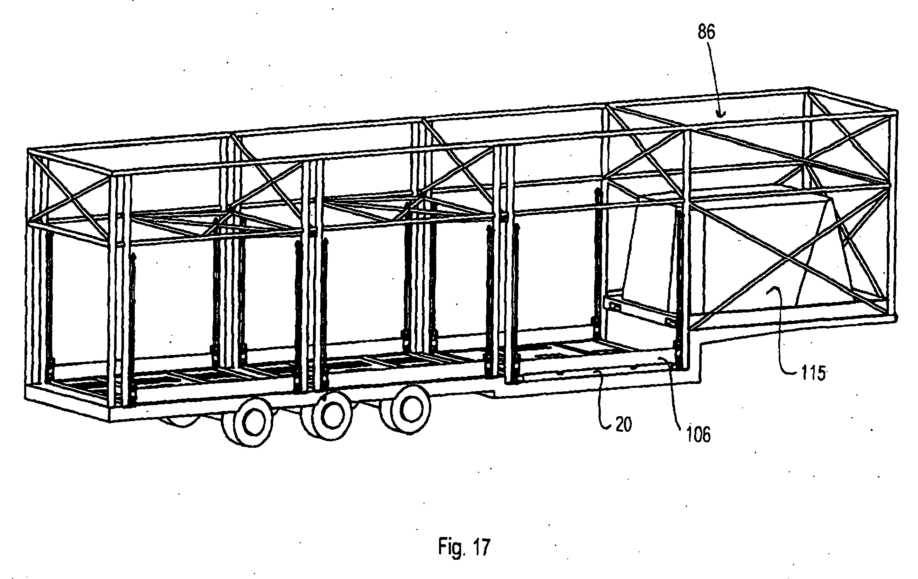

Once the first pallet 115 has been arranged, the platform 20 (Figure 17) moves downwards until it is positioned in the first operating position, the platform 20 is released by the first elevating means 106 and the latter is fixed by means of the first fixing means to the second surface 9.

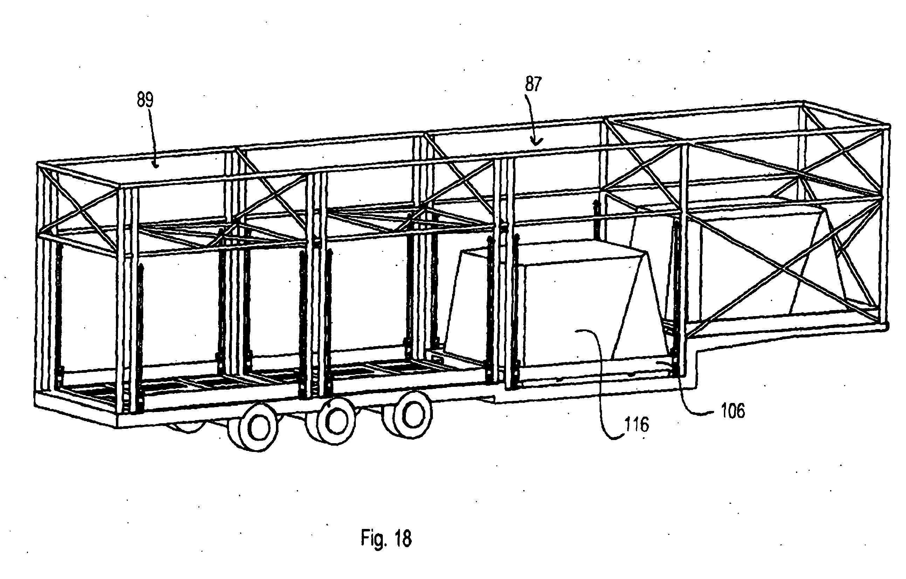

It is now possible to place a second pallet 116 (Figure 18) on the loading platform 3.

The second pallet 116 is dragged by the motor rollers 13 and by the further motor rollers 24 from the third double loading station 89 to the first double loading station 87 and is more precisely located on the first elevating means 106.

The first elevating means 106 lifts the second pallet 116 to a first lifting height S1 (Figure 19).

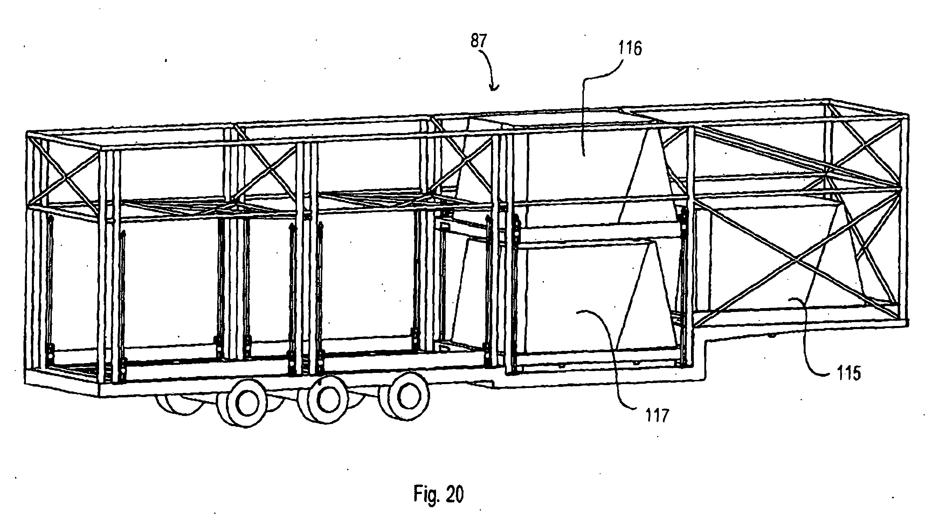

At this point on the loading platform 3 a third pallet 117 (Figure 20) can be located that similarly to the first two is dragged by the motor rollers 13 and by the further motor rollers 24 from the third double loading station 89 to the first double loading station 87, substantially below the second pallet 116.

Once the third pallet 117 has reached the first double loading station 87 the further motor rollers 24 stop and go to the rest position, to enable suitable anchoring of the third pallet 117 on the platform 20.

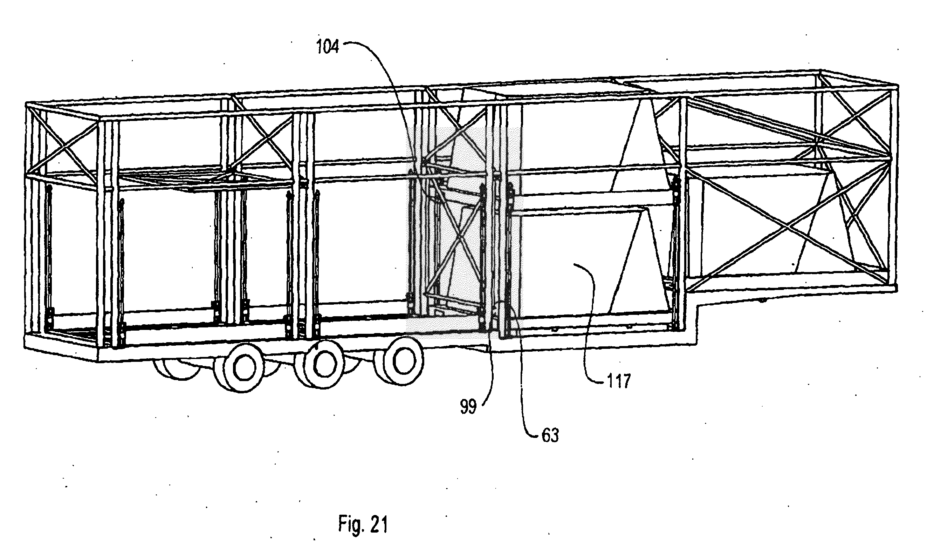

It is now possible to rotate the first movable gate 104 (Figure 21), taking it to the second operating position and using the anchoring means 63 to fix it to the first gap 99.

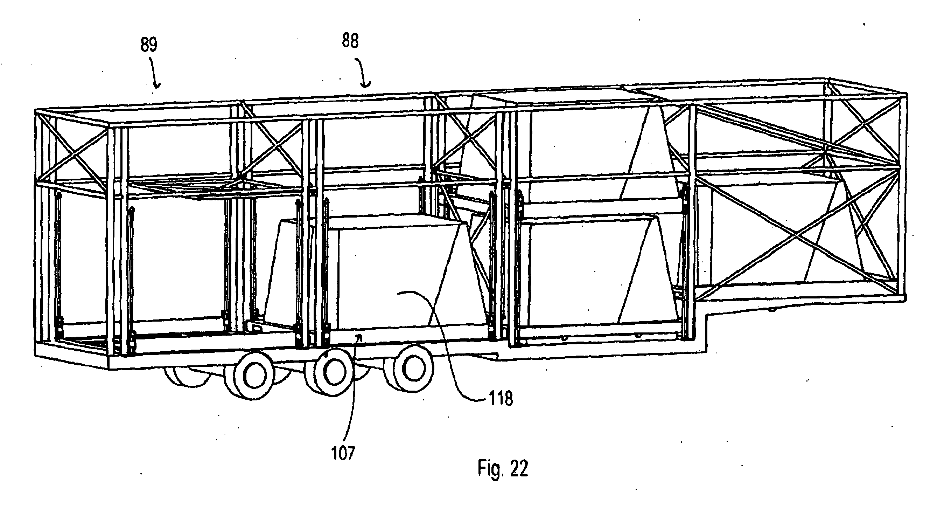

Subsequently, on the loading platform 3 a fourth pallet 118 (Figure 22) that is dragged by the motor rollers 13 from the third double loading station 89 to the second double loading station 88 can be located and more precisely it is located on the second elevating means 107.

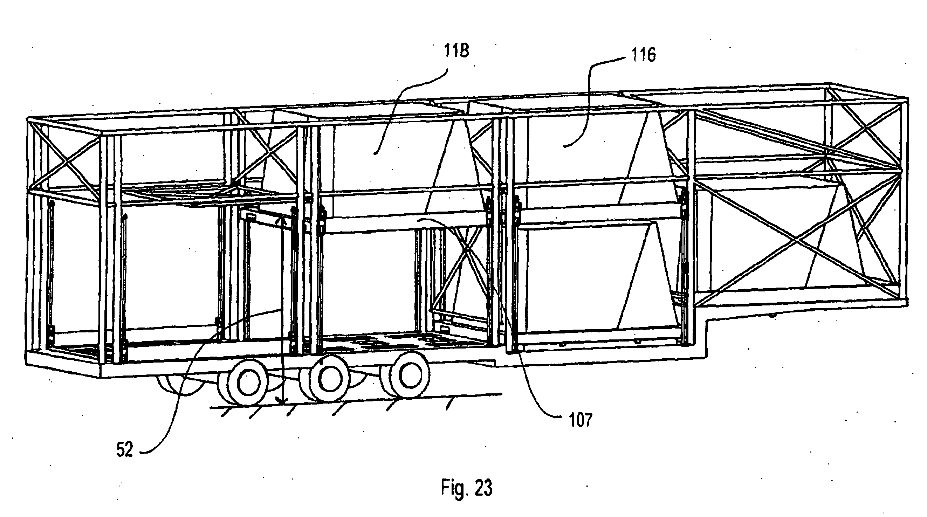

The second elevating means 107 (Figure 23) lifts the fourth pallet 118 to a second lifting height S2 and maintains the pallet 118 lifted there at the second lifting height S2 that is the same as the first lifting height S1 when the second pallet 116 extends vertically as much as the fourth pallet 118.

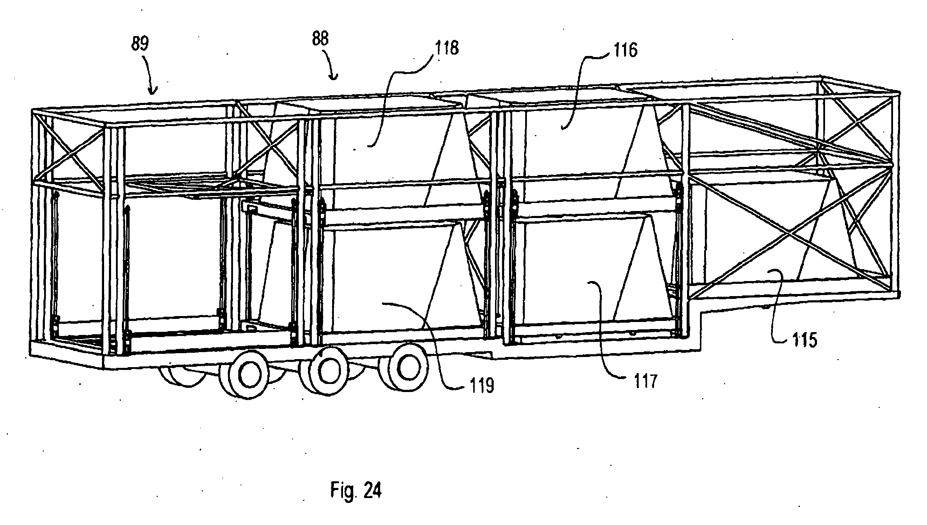

It is now possible to load a fifth pallet 119 (Figure 24) that is conveyed by the motor rollers 13 from the third double loading station 89 to the second double loading station 88, substantially below the fourth pallet 118.

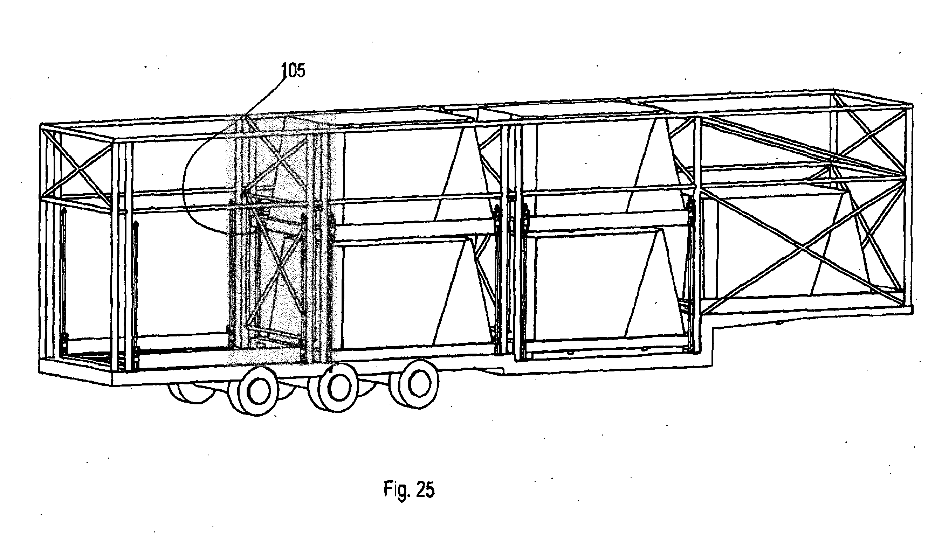

At this point, rotation of the motor rollers 13 of the second double loading station 88 stops, the motor rollers 13 and the free to rotate rollers 14 of the second double loading station 88 are placed in the rest position and the second movable gate 105 (Figure 25) is rotated, placing it in the second operating position, and using the anchoring means 63 it is fixed to the second gap 100.

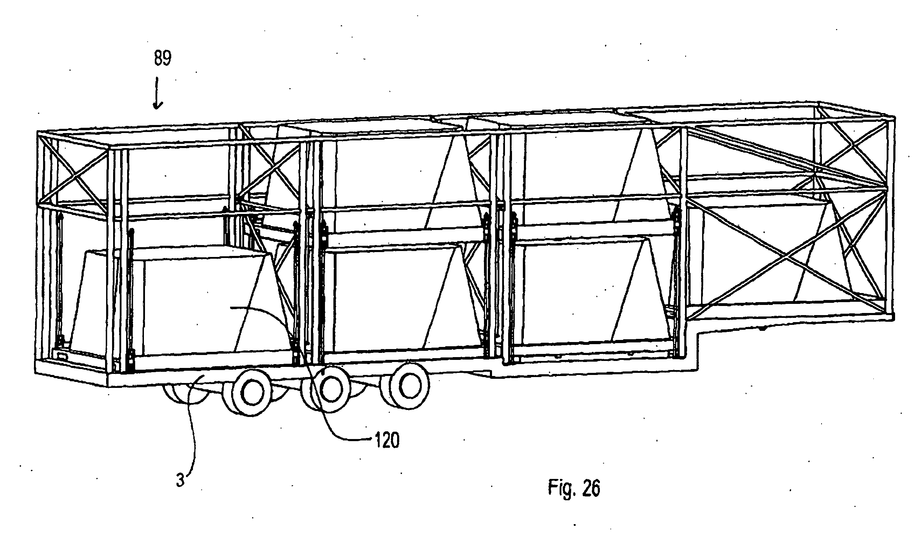

Subsequently, on the loading platform 3 a sixth pallet 120 (Figure 26) can be placed that is dragged by the motor rollers 13 to the third double loading station 89 and is more precisely placed on the third elevating means 108.

The third elevating means 108 lifts the sixth pallet 120 to a third lifting height S3 and maintains the sixth pallet 120 lifted there, which third lifting height S3 is the same as the first lifting height S1 and as the second lifting height S2 when the sixth pallet 120 extends as far vertically as the fourth pallet 118 and the second pallet 116.

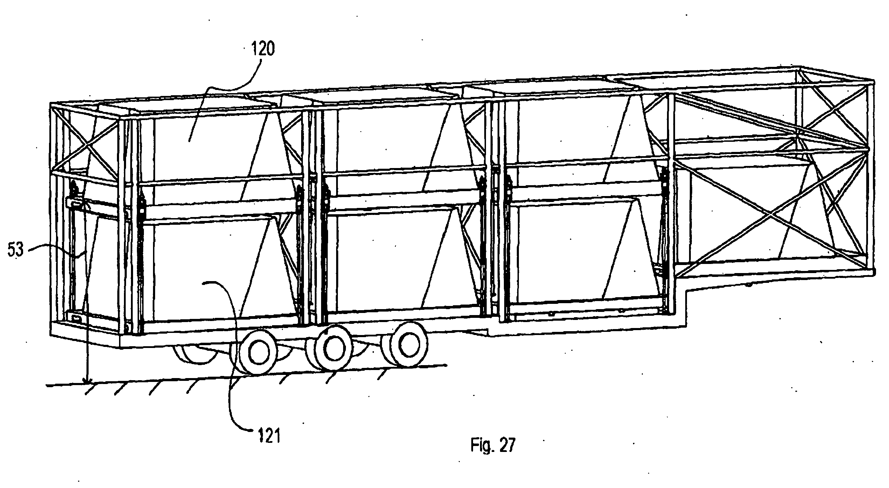

It is now possible to load a seventh pallet 121 (Figure 27) that is conveyed by the motor rollers 13 to the third double loading station 89, substantially below the sixth pallet 120.

At this point, rotation of the motor rollers 13 is blocked and the conveying rollers 12 are taken to the rest position. It is now possible to shut the loading space 94 by means of a rear door that is not shown, with which the trailer 96 is provided.

The operation of the apparatus 1 when it is desired to unload the loading space 94, comprises the steps conducted in the reverse order that are disclosed when it is desired to load the loading space 94.

It should be noted that the apparatus 1 is able to convey up to seven pallets, as opposed to only the four pallets of the known apparatuses.

It should furthermore be noted that the elevating means can be positioned at different operating heights, enabling pallets having various heights to be positioned in the loading space, so as to optimise the space made available by the loading space 94.

## Claims

1. Apparatus for moving air transportation pallets (2, 115, 116, 117, 118, 119, 120, 121) in a loading space (94) of a land vehicle, said apparatus being provided with a loading platform (3), rolling means (12) provided in said loading platform (3) for moving substantially horizontally said pallets (2, 115, 116, 117, 118, 119, 120, 121) along said loading platform (3), and elevating means (20; 65) for elevating said pallets (2, 115, 116, 117, 118, 119, 120, 121) away from said loading platform (3) when the elevating means (20; 65) are placed on the loading platform (3) and vice versa, wherein said elevating means (20; 65) comprises a platform (20) provided with further rolling means (23), wherein said elevating means (20; 65) comprises first elevating means (106), second elevating means (107) and third elevating means (108), wherein said platform (20) is interposed between said first elevating means (106) and a portion (5) of said loading platform (3), ***characterised in that*** said platform (20) is provided with fixing means arranged for fixing it to said portion (5) *and **in that*** said platform (20) is provided with further fixing means arranged for fixing it to said first elevating means (106).

2. Apparatus according to claim 1, wherein said elevating means (65) comprises frame means (66) arranged for supporting said pallets (2, 115, 116, 117, 118, 119, 120, 121).

3. Apparatus according to claim 2, wherein said frame means (66) comprises containing means (71) for retaining laterally said pallets (2, 115,116, 117, 118, 119, 120, 121) during the movement of said land vehicle.

4. Apparatus according to claim 2, or 3, wherein said frame means (66) has a substantially rectangular shape provided with vertices (80) wherein hole means (81) are obtained.

5. Apparatus according to any one of claims 2 to 4, wherein said frame means (66) comprises a plurality of crosspieces (102) arranged substantially transversely to a longitudinal extent of said frame means (66).

6. Apparatus according to any one of claims 2 to 5, wherein said elevating means (65) comprises driving means (140) arranged for lifting said frame means (66).

7. Apparatus according to claim 6, wherein said driving means (140) is positioned substantially at said vertices (80).

8. Apparatus according to claim 6, or 7, wherein said driving means (140) comprises spiral means (79).

9. Apparatus according to claim 8, as claim 6 is appended to claim 4, wherein said spiral means (79) comprises threaded hole means (82) substantially aligned on said hole means (81).

10. Apparatus according to claim 8, or 9, wherein said spiral means (79) is supported by supporting means (74, 75) projecting from an upper surface of said frame means (66).

11. Apparatus according to claim 10, wherein an intermediate region (110) of said supporting means (74, 75) supports a drilled element (83) interposed between said spiral means (79) and said frame means (66).

12. Apparatus according to any one of claims 6 to 11, wherein said driving means (140) comprises screw means (85).

13. Apparatus according to claim 12, wherein said screw means (85) extends substantially vertically and is arranged for engaging with said threaded hole means (82) and traverses said drilled element (83) and said hole means (81).

14. Apparatus according to any one of claims 6 to 13, wherein said driving means (140) comprises flexible driving means arranged for rotating said screw means (85).

15. Apparatus according to claim 14, wherein said flexible driving means engages with portions (124) of said screw means (85) projecting from said hole means (81) substantially below said loading platform (3).

16. Apparatus according to claim 14, or 15, wherein said flexible driving means connects distinct pairs of said screw means (85).

17. Apparatus according to claim 14, or 15, wherein said flexible driving means connects said screw means (85) reciprocally.

18. Apparatus according to claim 14, or 15, wherein said screw means are each controlled by respective motor means.

19. Apparatus according to any one of claims 2 to 18, wherein said elevating means (65) is provided with sliding block means (91) arranged for sliding along guide means (92).

20. Apparatus according to claim 19, wherein said guide means (92) is associated with upright means (30) projecting vertically from said loading platform (3).

21. Apparatus according to claim 19, wherein said first elevating means (106), said second elevating means (107) and said third elevating means (108) are positioned respectively in a first loading station (87), in a second loading station (88) and in a third loading station (89) that are consecutive along said loading platform (3) and are defined by said upright means (30).

22. Apparatus according to any preceding claim, and further comprising a frame (29) projecting from said loading platform (3) to define said loading space (94).

23. Apparatus according to claim 22, wherein said frame (29) is provided with reinforcing means (49) positioned substantially transversely with respect to said loading platform (3) and arranged for blocking the sliding of said pallets (2, 115, 116, 117, 118, 119, 120, 121) along said loading platform (3).

24. Apparatus according to claim 23, wherein said reinforcing means (49) is positioned in an upper region of said loading space (94).

25. Apparatus according to any one of claims 22 to 24, wherein said frame (29) comprises further reinforcing means (55) for further stiffening said loading space (94).

26. Apparatus according to claim 25, wherein said further reinforcing means (55) is positioned between said first loading station (87) and said second loading station (88) and between said second loading station (88) and said third loading station (89).

27. Apparatus according to claim 25, or 26, wherein said further reinforcing means (55) is movable between a vertical position and a horizontal position through further driving means.

28. Apparatus according to claim 27, wherein said further driving means comprises gas springs.

29. Apparatus according to claim 27 or 28, wherein said further reinforcing means is provided with anchoring means (63) arranged for anchoring it to said upright means (30), when said further reinforcing means (55) is in said vertical position.

30. Apparatus according to any one of claims 5 to 29, wherein said elevating means (20; 65) is received in housing means arranged transversely to said loading platform (3), so that when the elevating means (65) is at the lowest position, said crosspieces (102) are substantially coplanar with said loading platform (3).

31. Apparatus according to claim 1, wherein said platform (20) is movable away from or towards said portion (5) by said first elevating means (106).

32. Apparatus according to any one preceding claim, wherein said platform (20) is positioned at a recess (5) of said loading platform (3) in such a way as to be, in the lowered position, substantially coplanar with a remaining part (6) of said loading platform (3).

33. Apparatus according to any one of claims 5 to 32, wherein in said platform (20) further housing means (141) is obtained that is arranged so as to receive said crosspieces (102) when said first elevating means (106) is in the lowest position.

34. Apparatus according to any preceding claim, wherein said loading platform measures approximately 2550 millimetres in width.

35. Apparatus according to any preceding claim, wherein said land vehicle has a height measuring approximately 4040 millimetres.

## Patentansprüche

1. Vorrichtung zum Bewegen von Lufttransport-Paletten (2, 115, 116, 117, 118, 119, 120, 121) in einem Laderaum (94) eines Landfahrzeugs, wobei die Vorrichtung versehen ist mit einer Lade-Plattform (3), mit Rollenmittel, die (12) in der Lade-Plattform (3) zum im Wesentlichen horizontalen Bewegen der Paletten (2, 115, 116, 117, 118, 119, 120, 121) entlang der Lade-Plattform (3) vorgesehen sind, und Hebemittel (20; 65) zum Heben der Paletten (2, 115, 116, 117, 118, 119, 120, 121) von der Lade-Plattform (3) weg, wenn die Hebemittel (20; 65) auf der Lade-Plattform (3) angeordnet sind und umgekehrt, wobei das Hebemittel (20; 65) eine Plattform umfasst, die mit weiteren Rollenmitteln (23) versehen ist, wobei das Hebemittel (20; 65) ein erstes Hebemittel (106), ein zweites Hebemittel (107) und ein drittes Hebemittel (108) umfasst, wobei die Plattform (20) zwischen dem ersten Hebemittel (106) und einem Bereich (5) von der Lade-Plattform (3) dazwischen angeordnet ist, **dadurch gekennzeichnet, dass** die Plattform (20) mit einem Fixiermittel versehen ist, das angeordnet ist, um es an dem Bereich (5) zu fixieren und dadurch, dass die Plattform (20) mit einem weiteren Fixiermittel versehen ist, das ausgelegt ist, um es an das erste Hebemittel (106) zu fixieren.

2. Vorrichtung gemäß Anspruch 1, bei der das Hebemittel (65) ein Gestell-Mittel (66) umfasst, das ausgelegt ist, um die Paletten (2, 115, 116, 117, 118, 119, 120, 121) zu halten

3. Vorrichtung nach Anspruch 2, bei der das Gestell-Mittel (66) ein Aufnahmemittel (71) zum seitlichen Festhalten der Paletten (2, 115, 116, 117, 118, 119, 120, 121) während der Bewegung des Landfahrzeugs umfasst.

4. Vorrichtung gemäß Anspruch 2 oder 3, bei der das Gestell-Mittel (66) eine im Wesentlichen rechteckige Form umfasst, die mit Ecken versehen ist, in denen Öffnungsmittel (81) vorgesehen sind.

5. Vorrichtung gemäß einem der Ansprüche 2 bis 4, bei der das Gestell-Mittel (66) mehrere Querelemente (102) umfasst, die im Wesentlichen quer zu einem sich in Längsrichtung erstreckenden Ausmaß des Gestell-Mittels (66) angeordnet sind.

6. Vorrichtung gemäß einem der Ansprüche 2 bis 5, bei der das Hebemittel (65) ein Antriebsmittel (140) umfasst, das ausgelegt ist, um das Gestell-Mittel (66) zu heben.

7. Vorrichtung gemäß Anspruch 6, bei der das Antriebsmittel (140) im Wesentlichen an den Ecken (80) von dem Gestell-Mittel positioniert ist.

8. Vorrichtung gemäß Anspruch 6 oder 7, bei der das Antriebsmittel (140) ein Spiralmittel (79) umfasst.

9. Vorrichtung gemäß Anspruch 8, soweit Anspruch 6 von Anspruch 4 abhängig ist, bei der das Spiral-Mittel (79) ein Gewinde-Öffnungsmittel (82) umfasst, das im Wesentlichen zu dem Öffnungsmittel (81) ausgerichtet ist.

10. Vorrichtung gemäß Anspruch 8 oder 9, bei der das Spiral-Mittel (79) von Haltemitteln (74, 75) gehalten ist, die von einer oberen Fläche von dem Gestell-Mittel (66) hervorstehen.

11. Vorrichtung gemäß Anspruch 10, bei der ein mittlerer Bereich (110) von den Haltemitteln (74, 75) ein gebohrtes Element (83) hält, das zwischen dem Spiral-Mittel (79) und dem Rahmenmittel (66) dazwischen angeordnet ist.

12. Vorrichtung gemäß einem der Ansprüche 6 bis 11, bei der das Antriebsmittel (140) ein Schraubenmittel (85) umfasst.

13. Vorrichtung gemäß Anspruch 12, bei der sich das Schraubenmittel (85) im Wesentlichen vertikal erstreckt und ausgelegt ist, um mit dem Gewinde-Öffnungsmittel (82) in Eingriff zu stehen und das gebohrte Element (83) und das Öffnungsmittel (81) durchquert.

14. Vorrichtung gemäß einem der Ansprüche 6 bis 13, bei der das Antriebsmittel (140) ein flexibles Antriebsmittel umfasst, das ausgelegt ist, um das Schraubenmittel (85) zu drehen.

15. Vorrichtung gemäß Anspruch 14, bei der das flexible Antriebsmittel mit Bereichen (124) von dem Schraubenmittel (85) in Eingriff steht, die von dem Öffnungsmittel (81) im Wesentlichen unter der Lade-Plattform (3) hervorstehen.

16. Vorrichtung gemäß Anspruch 14 oder 15, bei der das flexible Antriebsmittel verschiedene Paare von Schraubenmitteln (85) verbindet.

17. Vorrichtung gemäß Anspruch 14 oder 15, bei der das flexible Antriebsmittel die Schraubenmittel (85) wechselseitig verbindet.

18. Vorrichtung gemäß Anspruch 14 oder 15, bei der die Schraubenmittel von dem jeweiligen Antriebsmittel gesteuert sind.

19. Vorrichtung gemäß einem der Ansprüche 2 bis 18, bei der das Hebemittel (65) mit einem gleitenden Blockmittel (91) versehen ist, das zum Gleiten entlang eines Führungsmittels (92) ausgelegt ist.

20. Vorrichtung gemäß Anspruch 19, bei der das Führungsmittel (92) mit einem senkrechten Mittel (30) verbunden ist, das vertikal von der Lade-Plattform (3) hervorsteht.

21. Vorrichtung gemäß Anspruch 19, bei der das erste Hebemittel (106), das zweite Hebemittel (107) und das dritte Hebemittel (108) jeweils in einer ersten Ladestation (87), in einer zweiten Ladestation (88) und an einer dritten Ladestation (89) positioniert sind, die aufeinanderfolgend entlang der Lade-Plattform (3) angeordnet sind und über die senkrechten Mittel (30) definiert sind.

22. Vorrichtung gemäß einem der vorstehenden Ansprüche und weiter umfassend ein Gestell (29), das von der Lade-Plattform (3) hervorsteht, um den Laderaum (94) zu definieren.

23. Vorrichtung gemäß Anspruch 22, bei der der Rahmen (29) mit einem Verstärkungsmittel (49) versehen ist, das im Wesentlichen quer bezüglich der Lade-Plattform (3) positioniert ist, und angeordnet ist, um das Gleiten der Paletten (2, 115, 116, 117, 118, 119, 120, 121) entlang der Lade-Plattform (3) zu verhindern.

24. Vorrichtung gemäß Anspruch 23, bei der das Verstärkungsmittel (49) in einem oberen Bereich von dem Laderaum (94) positioniert ist.

25. Vorrichtung gemäß einem der Ansprüche 22 bis 24, bei der der Rahmen (29) ein weiteres Verstärkungsmittel (55) für eine weitere Versteifung des Laderaums (94) umfasst.

26. Vorrichtung gemäß Anspruch 25, bei der das weitere Verstärkungsmittel (55) zwischen der ersten Ladestation (87) und der zweiten Ladestation (88) und zwischen der zweiten Ladestation (88) und der dritten Ladestation (89) positioniert ist.

27. Vorrichtung gemäß Anspruch 25 oder 26, bei der das weitere Verstärkungsmittel (55) zwischen einer vertikalen Position und einer horizontalen Position über ein weiteres Antriebsmittel bewegbar ist.

28. Vorrichtung gemäß Anspruch 27, bei der das weitere Antriebsmittel Gasfedern umfasst.

29. Vorrichtung gemäß Anspruch 27 oder 28, bei der das weitere Verstärkungsmittel mit einem Befestigungsmittel (63) versehen ist, das ausgelegt ist, um es an die senkrechten Mittel (30) zu befestigen, wenn sich das weitere Verstärkungsmittel (55) in seiner vertikalen Position befindet.

30. Vorrichtung gemäß einem der Ansprüche 5 bis 29, bei der das Hebemittel (20, 65) in einem Gehäusemittel aufgenommen ist, das quer zu der Lade-Plattform (3) angeordnet ist, so dass, wenn sich das Hebemittel (65) an der untersten Position befindet, die Querelemente (102) im Wesentlichen koplanar zu der Lade-Plattform (3) ausgerichtet sind.

31. Vorrichtung gemäß Anspruch 1, bei der die Plattform (20) über das erste Hebemittel (106) weg von oder zu dem Bereich (5) bewegbar ist.

32. Vorrichtung gemäß einem der vorstehenden Ansprüche, bei der die Plattform (20) an einer Ausnehmung (5) von der Lade-Plattform (3) derart positioniert ist, um so in der heruntergelassenen Position, im Wesentlichen koplanar mit einem verbleibenden Teil (6) von der Lade-Plattform (3) ausgerichtet zu sein.

33. Vorrichtung gemäß einem der Ansprüche 5 bis 32, bei der in der Plattform (20) ein weiteres Gehäusemittel (141) erhalten ist, das derart angeordnet ist, um die Querelemente (102) aufzunehmen, wenn das erste Hebemittel (106) sich in der untersten Position befindet.

34. Vorrichtung gemäß einem der vorstehenden Ansprüche, bei der die Lade-Plattform in etwa 2550 mm in der Breite misst.

35. Vorrichtung gemäß einem der vorstehenden Ansprüche, bei der das Landfahrzeug eine Höhe umfasst, die in etwa 4040 mm misst.

## Revendications

1. Appareil pour le déplacement de palettes (2, 115, 116, 117, 118, 119, 120, 121), destinées au transport aérien, dans un espace de chargement (94) d'un véhicule terrestre, ledit appareil étant équipé d'une plate-forme de chargement (3), de moyens de roulement (12) prévus dans ladite plate-forme de chargement (3) pour déplacer de manière sensiblement horizontale lesdites palettes (2, 115, 116, 117, 118, 119, 120, 121) le long de ladite plate-forme de chargement (3), et de moyens élévateurs (20 ; 65) pour soulever lesdites palettes (2, 115, 116, 117, 118, 119, 120, 121) par rapport à ladite plate-forme de chargement (3) lorsque les moyens élévateurs (20 ; 65) sont placés sur la plate-forme de chargement (3) et réciproquement, dans lequel lesdits moyens élévateurs (20 ; 65) comprennent une plate-forme (20) équipée de moyens de roulement supplémentaires (23), dans lequel lesdits moyens élévateurs (20 ; 65) comprennent des premiers moyens élévateurs (106), des deuxièmes moyens élévateurs (107) et des troisièmes moyens élévateurs (108), dans lequel ladite plate-forme (20) est interposée entre lesdits premiers moyens élévateurs (106) et une partie (5) de ladite plate-forme de chargement (3), ***caractérisé en ce que*** ladite plate-forme (20) est équipée de moyens de fixation adaptés pour la fixer à ladite partie (5) *et **en ce que*** ladite plate-forme (20) est équipée de moyens de fixation supplémentaires adaptés pour la fixer auxdits premiers moyens élévateurs (106).

2. Appareil selon la revendication 1, dans lequel lesdits moyens élévateurs (65) comprennent des moyens d'armature (66) adaptés pour soutenir lesdites palettes (2, 115, 116, 117, 118, 119, 120, 121).

3. Appareil selon la revendication 2, dans lequel lesdits moyens d'armature (66) comprennent des moyens de retenue (71) pour retenir latéralement lesdites palettes (2, 115, 116, 117, 118, 119, 120, 121) pendant le déplacement dudit véhicule terrestre.

4. Appareil selon la revendication 2 ou 3, dans lequel lesdits moyens d'armature (66) ont une forme sensiblement rectangulaire dotée de sommets (80) dans lesquels des moyens à orifice (81) sont obtenus.

5. Appareil selon l'une quelconque des revendications 2 à 4, dans lequel lesdits moyens d'armature (66) comprennent une pluralité de traverses (102) disposées de manière sensiblement transversale par rapport à une étendue longitudinale desdits moyens d'armature (66).

6. Appareil selon l'une quelconque des revendications 2 à 5, dans lequel lesdits moyens élévateurs (65) comprennent des moyens d'entraînement (140) adaptés pour soulever lesdits moyens d'armature (66).

7. Appareil selon la revendication 6, dans lequel lesdits moyens d'entraînement (140) sont positionnés sensiblement auxdits sommets (80).

8. Appareil selon la revendication 6 ou 7, dans lequel lesdits moyens d'entraînement (140) comprennent des moyens à spirale (79).

9. Appareil selon la revendication 8, dans la mesure où la revendication 6 dépend de la revendication 4, dans lequel lesdits moyens à spirale (79) comprennent des moyens à orifice taraudé (82) sensiblement alignés avec lesdits moyens à orifice (81).

10. Appareil selon la revendication 8 ou 9, dans lequel lesdits moyens à spirale (79) sont soutenus par des moyens de support (74, 75) qui sont en saillie à partir d'une surface supérieure desdits moyens d'armature (66).

11. Appareil selon la revendication 10, dans lequel une zone intermédiaire (110) desdits moyens de support (74, 75) porte un élément à alésage (83) interposé entre lesdits moyens à spirale (79) et lesdits moyens d'armature (66).

12. Appareil selon l'une quelconque des revendications 6 à 11, dans lequel lesdits moyens d'entraînement (140) comprennent des moyens à vis (85).

13. Appareil selon la revendication 12, dans lequel lesdits moyens à vis (85) s'étendent de manière sensiblement verticale et sont adaptés pour venir en engagement avec lesdits moyens à orifice taraudé (82), et traversent ledit élément à alésage (83) et lesdits moyens à orifice (81).

14. Appareil selon l'une quelconque des revendications 6 à 13, dans lequel lesdits moyens d'entraînement (140) comprennent des moyens d'entraînement flexibles adaptés pour faire tourner lesdits moyens à vis (85).

15. Appareil selon la revendication 14, dans lequel lesdits moyens d'entraînement flexibles viennent en engagement avec des parties (124) desdits moyens à vis (85) qui sont en saillie par rapport auxdits moyens à orifice (81) sensiblement au-dessous de ladite plate-forme de chargement (3).

16. Appareil selon la revendication 14 ou 15, dans lequel lesdits moyens d'entraînement flexibles relient des paires distinctes desdits moyens à vis (85).

17. Appareil selon la revendication 14 ou 15, dans lequel lesdits moyens d'entraînement flexibles relient lesdits moyens à vis (85) de manière réciproque.

18. Appareil selon la revendication 14 ou 15, dans lequel lesdits moyens à vis sont commandés chacun par des moyens à moteur respectifs.

19. Appareil selon l'une quelconque des revendications 2 à 18, dans lequel lesdits moyens élévateurs (65) sont équipés de moyens à blocs coulissants (91) adaptés pour coulisser le long de moyens de guidage (92).

20. Appareil selon la revendication 19, dans lequel lesdits moyens de guidage (92) sont associés à des moyens à montants (30) qui sont en saillie verticalement par rapport à ladite plate-forme de chargement (3).

21. Appareil selon la revendication 19, dans lequel lesdits premiers moyens élévateurs (106), lesdits deuxièmes moyens élévateurs (107) et lesdits troisièmes moyens élévateurs (108) sont positionnés respectivement dans une première station de chargement (87), dans une deuxième station de chargement (88) et dans une troisième station de chargement (89) qui sont situées de manière consécutive le long de ladite plate-forme de chargement (3) et qui sont définies par lesdits moyens à montants (30).

22. Appareil selon une quelconque revendication précédente, et comprenant en outre une armature (29) qui est en saillie par rapport à ladite plate-forme de chargement (3) afin de définir ledit espace de chargement (94).

23. Appareil selon la revendication 22, dans lequel ladite armature (29) est équipée de moyens de renfort (49) positionnés de manière sensiblement transversale par rapport à ladite plate-forme de chargement (3) et adaptés pour empêcher le glissement desdites palettes (2, 115, 116, 117, 118, 119, 120, 121) le long de ladite plate-forme de chargement (3).

24. Appareil selon la revendication 23, dans lequel lesdits moyens de renfort (49) sont positionnés dans une partie supérieure dudit espace de chargement (94).

25. Appareil selon l'une quelconque des revendications 22 à 24, dans lequel ladite armature (29) comprend des moyens de renfort supplémentaires (55) adapté pour rigidifier davantage ledit espace de chargement (94).

26. Appareil selon la revendication 25, dans lequel lesdits moyens de renfort supplémentaires (55) sont positionnés entre ladite première station de chargement (87) et ladite deuxième station de chargement (88) et entre ladite deuxième station de chargement (88) et ladite troisième station de chargement (89).

27. Appareil selon la revendication 25 ou 26, dans lequel lesdits moyens de renfort supplémentaires (55) sont mobiles entre une position verticale et une position horizontale à l'aide de moyens d'entraînement supplémentaires.

28. Appareil selon la revendication 27, dans lequel lesdits moyens d'entraînement supplémentaires comprennent des ressorts à gaz.

29. Appareil selon la revendication 27 ou 28, dans lequel lesdits moyens de renfort supplémentaires sont équipés de moyens d'accrochage (63) adaptés pour les accrocher auxdits moyens à montants (30), lorsque lesdits moyens de renfort supplémentaires (55) sont dans ladite position verticale.

30. Appareil selon l'une quelconque des revendications 5 à 29, dans lequel lesdits moyens élévateurs (20 ; 65) sont reçus dans des moyens de logement disposés de manière transversale par rapport à ladite plate-forme de chargement (3), de telle manière que, lorsque les moyens élévateurs (65) sont dans la position la plus basse, lesdites traverses (102) sont sensiblement coplanaires avec ladite plate-forme de chargement (3).

31. Appareil selon la revendication 1, dans lequel ladite plate-forme (20) est mobile à partir de ou vers ladite partie (5) sous l'action desdits premiers moyens élévateurs (106).

32. Appareil selon une quelconque revendication précédente, dans lequel ladite plate-forme (20) est positionnée au niveau d'une partie en retrait (5) de ladite plate-forme de chargement (3) de manière à ce qu'elle soit, dans la position abaissée, sensiblement coplanaire avec une partie restante (6) de ladite plate-forme de chargement (3).

33. Appareil selon l'une quelconque des revendications 5 à 32, dans lequel, dans ladite plate-forme (20), des moyens de logement supplémentaires (141) sont obtenus, en étant disposés de manière à recevoir lesdites traverses (102) lorsque lesdits premiers moyens élévateurs (106) sont dans la position la plus basse.

34. Appareil selon une quelconque revendication précédente, dans lequel ladite plate-forme de chargement mesure approximativement 2550 millimètres, en largeur.

35. Appareil selon une quelconque revendication précédente, dans lequel ledit véhicule terrestre a une hauteur qui mesure approximativement 4040 millimètres.
